# FASCICULE DE BREVET EUROPEEN

(11) **EP 4 176 286 B1**
(45) Date de publication et mention de la délivrance du brevet: **27.05.2026**
(21) Numéro de dépôt: 21730585.3
(22) Date de dépôt: 07.06.2021
(51) Int. Cl.: G01S 17/931, G01S 17/89, G01S 7/48

(54) **SYSTÈME ET PROCÉDÉ DE DÉTECTION D'UN OBSTACLE DANS UN ENVIRONNEMENT D'UN VÉHICULE**
SYSTEM UND VERFAHREN ZUR ERKENNUNG EINES HINDERNISSES IN EINEM UMGEBUNGSBEREICH EINES KRAFTFAHRZEUGS
SYSTEM AND METHOD FOR DETECTING AN OBSTACLE IN AN AREA SURROUNDING A MOTOR VEHICLE

(30) Priorité: 01.07.2020 FR 2006963
(43) Date de publication de la demande: 10.05.2023
(73) Titulaire: Ampere SAS, 92100 Boulogne-Billancourt (FR)
(72) Inventeur: BELTRAN DE LA CITA, Jorge, 28901 Getafe (ES); MILANES, Vicente, 92100 Boulogne-Billancourt (FR); GUINDEL GOMEZ, Carlos, 28400 Collado Villalba (ES); GARCIA FERNANDEZ, Fernando, 28912 Madrid (ES); CORTES LAFUENTE, Irene, 50300 Calatayud (ES)
(74) Mandataire: Renault Group
(86) Numéro de dépôt international: PCT/EP2021/065118
(87) Numéro de publication internationale: WO 2022/002531

(56) Documents cités:
- WO-A1-2019/025035
- WO-A1-2019/241510
- US-A1- 2019 287 254
- US-A1- 2020 150 275
- US-A1- 2020 160 542

## Description

### Domaine technique

L'invention concerne de manière générale les systèmes de détection et en particulier un dispositif et un procédé de détection d'un ou plusieurs obstacles dans l'environnement d'un véhicule utilisant des capteurs.

L'automatisation des véhicules est un enjeu majeur pour la sécurité automobile et l'optimisation de la conduite. Les véhicules automatisés, comme par exemple les véhicules autonomes et connectés, utilisent un système de perception comprenant un ensemble de capteurs pour détecter des informations environnementales permettant au véhicule d'optimiser sa conduite et d'assurer la sécurité des passagers. Il est en effet primordial, dans un mode de conduite autonome, de pouvoir détecter les obstacles dans l'environnement du véhicule afin d'adapter sa vitesse et/ou trajectoire.

Pour détecter des obstacles dans l'environnement du véhicule, il est connu d'utiliser des solutions de perception existantes basées sur des capteurs autonomes comme des solutions où une seule caméra frontale est chargée de détecter les marques de voie ou tout obstacle, ou une combinaison de plusieurs capteurs traités indépendamment. Cela signifie que la sortie d'une caméra est fusionnée avec les informations déjà traitées d'un LIDAR (acronyme de l'expression anglo-saxonne « light detection and ranging », c'est-à-dire « détection et estimation de la distance par la lumière »). Ce traitement d'informations peut entraîner des erreurs importantes, notamment dues au fait que les capacités d'identification du type d'obstacle sont considérablement plus élevées à partir d'une caméra alors que la distance et la vitesse de cet obstacle sont mieux obtenues à partir d'un LIDAR. La fusion des deux informations dans une perspective de haut niveau entraîne une incohérence, étant en mesure d'identifier un seul véhicule précédent comme plusieurs véhicules à l'avant (c'est-à-dire un calcul d'interdistance incohérent à partir des deux capteurs travaillant indépendamment) ou une perte de cible (c'est-à-dire deux piétons marchant trop près l'un de l'autre).

En particulier, les solutions actuellement disponibles sont principalement basées sur les niveaux d'automatisation 2 ou 3 et sont limitées à une région de l'image ou ont une couverture limitée.

Le document US 8139109 divulgue un système de LIDAR et caméra basé sur la détection, qui peut être en couleur ou infrarouge. Le système est utilisé pour alimenter la commande d'un camion autonome. Le système fournit une détection d'obstacles, mais cette détection est basée sur des LIDAR et des caméras fonctionnant séparément. Les informations issues des LIDAR et caméras sont non fusionnées. Il existe ainsi un besoin pour un système de perception capable d'identifier et suivre tout obstacle autour du véhicule. Un véhicule autonome nécessite une détection précise et fiable des environnements routiers afin d'avoir une compréhension complète de l'environnement dans lequel il navigue.

La demande de brevet US 2019/0287254 A1 décrit un système dans lequel des données issues d'une image segmentée et d'un nuage de points 3D sont traitées ensemble, mais ne décrit pas la manière de procéder lorsque le système comprend plusieurs caméras. La demande de brevet WO 2019/0241510 A1 ne donne pas plus d'indications concernant la marche à suivre pour traiter les images acquises de plusieurs caméras.

L'invention vise à pallier tout ou partie des problèmes cités plus haut en proposant une solution capable de fournir des informations à 360 degrés sur les caméras et le LIDAR, conforme aux besoins d'un véhicule entièrement autonome, avec la détection et la prévision des mouvements des véhicules et/ou obstacles dans l'environnement du véhicule. Il en résulte une détection d'obstacle de grande précision, ce qui permet au véhicule de naviguer en toute sécurité dans l'environnement.

### Définition générale de l'invention

A cet effet, l'invention a pour objet un procédé de détection implémenté dans un véhicule pour détecter la présence d'un obstacle dans un environnement du véhicule selon la revendication 1.

Dans un mode de réalisation, le procédé de détection selon l'invention comprend en outre une étape de contrôle implémentant une boucle de contrôle pour générer au moins un signal de commande à un ou plusieurs actionneurs du véhicule en fonction des informations de l'obstacle détecté.

Avantageusement, le procédé de détection selon l'invention comprend une étape de synchronisation temporelle du LIDAR et des caméras préalablement aux étapes de scan et de capture d'image.

Avantageusement, l'étape d'estimation du mouvement de l'obstacle comprend une étape d'association des données GPS du véhicule avec la carte 3D générée, de sorte à identifier un obstacle précédemment détecté et une étape d'association de l'obstacle précédemment détecté avec ledit obstacle.

L'invention concerne aussi un produit programme d'ordinateur, ledit programme d'ordinateur comprenant des instructions de code permettant d'effectuer les étapes du procédé de détection selon l'invention, lorsque ledit programme est exécuté sur un ordinateur.

L'invention concerne aussi un système de perception embarqué dans un véhicule pour détecter la présence d'un obstacle dans un environnement du véhicule selon la revendication 6.

Avantageusement, le système de perception selon l'invention comprend en outre :
- une sixième caméra, préférentiellement positionnée à l'avant du véhicule, la sixième caméra étant de faible champ de vision pour une détection de loin ;
- une septième caméra, préférentiellement positionnée à l'avant du véhicule, la septième caméra étant de large champ de vision pour une détection proche ; chacune de la sixième et/ou septième caméra étant configurée pour capturer au moins une image dans une portion angulaire de l'environnement du véhicule, de sorte à générer, pour chacune de la sixième et/ou septième caméra, une représentation bidimensionnelle (2D) de l'obstacle situé dans la portion angulaire associée à la sixième et/ou septième caméra.

### Brève Description des Figures

D'autres caractéristiques, détails et avantages de l'invention ressortiront à la lecture de la description faite en référence aux dessins annexés donnés à titre d'exemple et dans lesquels :
La figure 1 représente en vue du dessus un exemple de véhicule équipé d'un système de perception selon l'invention ;
La figure 2 est un organigramme représentant le procédé de détection de la présence d'obstacle dans l'environnement du véhicule selon certains modes de réalisation de l'invention ;
La figure 3 illustre les performances du système de perception selon des modes de réalisation de l'invention ;
La figure 4 illustre les performances du système de perception selon des modes de réalisation de l'invention.

### Description détaillée

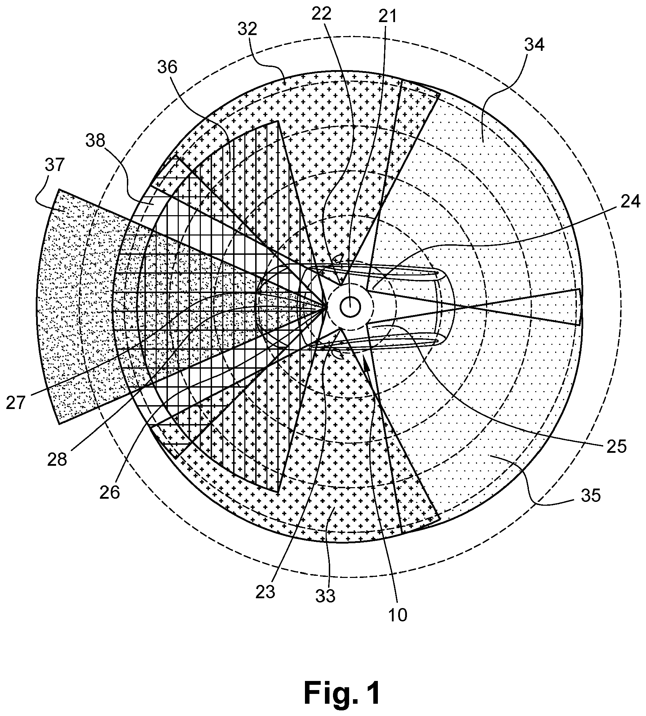

La figure 1 représente en vue du dessus un exemple de véhicule équipé d'un système de perception 20 selon l'invention. Le système de perception 20 est embarqué dans un véhicule 10 pour détecter la présence d'un obstacle dans un environnement du véhicule 10. Selon l'invention, le système de perception 20 comprend un LIDAR 21 positionné avantageusement sur une face supérieure du véhicule 10 et configuré pour scanner à 360° l'environnement du véhicule de sorte à générer un nuage de points 31 de l'obstacle. Le système de perception 20 comprend cinq caméras 22, 23, 24, 25, 26 positionnées autour du véhicule 10, chacune des caméras 22, 23, 24, 25, 26 étant configurée pour capturer au moins une image I₂, I₃, I₄, I₅, I₆ dans une portion angulaire 32, 33, 34, 35, 36 de l'environnement du véhicule 10, de sorte à générer, pour chaque caméra 22, 23, 24, 25, 26, une représentation bidimensionnelle (2D) de l'obstacle situé dans la portion angulaire 32, 33, 34, 35, 36 associée à ladite caméra 22, 23, 24, 25, 26. Avantageusement, mais pas obligatoirement, les cinq portions angulaires 32, 33, 34, 35, 36 des cinq caméras 22, 23, 24, 25, 26 couvrent l'environnement à 360° autour du véhicule 10. Le système de perception 20 comprend également un calculateur apte à attribuer, pour chaque image I₂, I₃, I₄, I₅, I₆ capturée, des points du nuage de points 31 correspondant à la représentation 2D dudit obstacle pour former un objet tridimensionnel (3D) 41. Le calculateur est apte à fusionner des objets 3D 41 pour générer une carte tridimensionnelle (3D) 42 des obstacles tout autour du véhicule 10. Enfin, le calculateur est apte à estimer le mouvement de l'obstacle à partir de la carte 3D 42 générée et de données GPS du véhicule 10 pour obtenir des informations sur la position, dimension, orientation et vitesse de véhicules détectés dans l'environnement du véhicule 10.

Les données GPS du véhicule peuvent être issues d'un système de positionnement par Satellite GNSS (acronyme pour « Global Navigation Satellite System ») si le véhicule est équipé d'un tel système. Les données GPS peuvent alternativement être fournies par une autre source non inclue au véhicule 10, par exemple par un système GPS via un Smartphone.

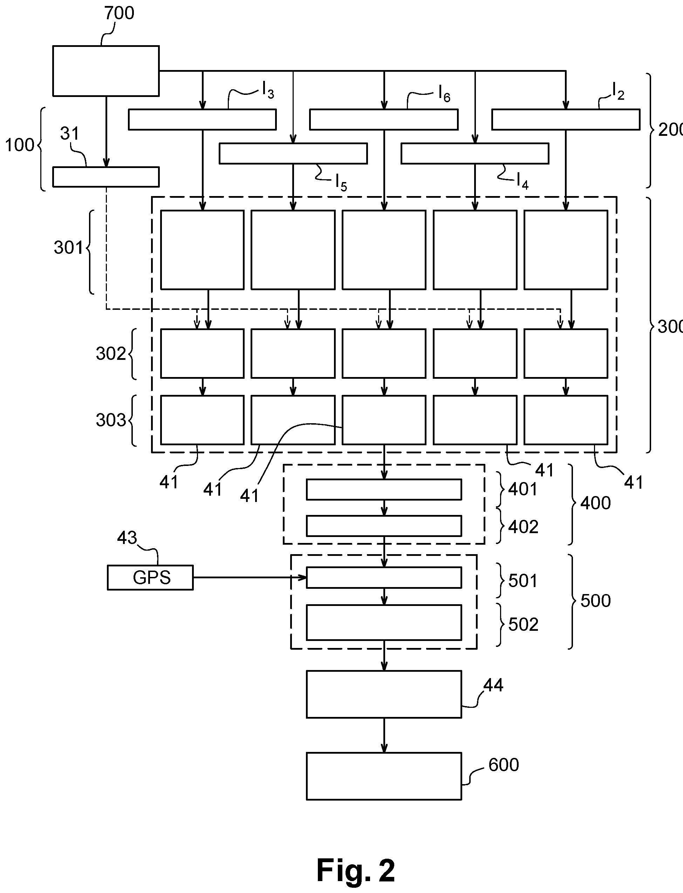

Les étapes du procédé de détection se basant sur le système de perception 20 seront décrites en détails ci-dessous en relation avec la figure 2.

Avantageusement, le système de perception 20 selon l'invention peut comprendre en outre une caméra 27 positionnée à l'avant du véhicule de faible champ de vision, pour la détection au loin et/ou une caméra 28 positionnée à l'avant du véhicule de large champ de vision pour la détection proche. Chacune des caméras 27, 28 est configurée pour capturer au moins une image I₇, I₈ dans une portion angulaire 37, 38 de l'environnement du véhicule 10, de sorte à générer, pour chaque caméra 27, 28, une représentation bidimensionnelle (2D) de l'obstacle situé dans la portion angulaire 37, 38 associée à ladite caméra 27, 28. Ces deux caméras additionnelles 27, 28 permettent la prise d'images à longue portée avec un champ de vision réduit pour les éventuels obstacles éloignes (caméra 27) et à courte portée avec un champ de vision élevé pour les éventuels obstacles proches du véhicule (caméra 28). Ces caméras sont avantageusement positionnées à l'avant du véhicule dans le sens privilégié d'avancement du véhicule. Dans un autre mode de réalisation, ces mêmes caméras pourraient être positionnées à l'arrière du véhicule, pour le sens d'avancement du véhicule dit de marche arrière. Ou bien le véhicule peut aussi être équipé de ces deux caméras 27, 28 positionnées à l'avant et de deux caméras identiques aux caméras 27, 28 positionnées à l'arrière, sans sortir du cadre de l'invention.

On peut noter que les caméras du système de perception 20 peuvent fonctionner dans le visible ou dans l'infrarouge.

Grâce à l'invention, le système de perception 20 peut détecter et/ou identifier, tout obstacle dans son environnement. Les obstacles peuvent être, à titre d'exemple et de façon non-limitative :
- des objets de l'environnement du véhicule 10 pouvant inclure des objets fixes ou mobiles, des objets verticaux (par exemple, feux tricolores, panneaux de signalisation, etc.),
- des piétons,
- des véhicules, et/ou
- des infrastructures routières.

L'invention trouve une application particulièrement avantageuse, mais sans s'y limiter, à la détection d'obstacles de type piétons ou véhicules qui pourraient générer une collision avec le véhicule. En détectant la présence d'un obstacle et le cas échéant la trajectoire potentielle de l'obstacle dans l'environnement du véhicule 10 dans lequel l'invention est mise en œuvre, l'invention permet d'éviter la collision entre l'obstacle et le véhicule 10 en prenant les mesures nécessaires telles qu'un freinage de la part du véhicule 10, une modification de sa propre trajectoire et/ou l'émission d'un signal sonore et/ou visuel ou tout autre type de signal à destination de l'obstacle identifié. Si l'obstacle est un véhicule autonome, les mesures nécessaires pour l'évitement de collision peuvent tout aussi bien inclure l'envoi d'un message à l'obstacle lui demandant de freiner et/ou modifier sa trajectoire.

Le système de perception 20 peut en outre implémenter des algorithmes de fusion pour traiter les informations issues des différentes caméras et du LIDAR et effectuer une ou plusieurs opérations de perception, comme par exemple le suivi et la prédiction de l'évolution de l'environnement du véhicule 10 dans le temps, la génération d'une carte dans laquelle est positionnée le véhicule 10, la localisation du véhicule 10 sur une carte, etc. Ces étapes seront détaillées ci-dessous dans la description du procédé de détection selon l'invention en se basant sur la figure 2.

La figure 2 est un organigramme représentant le procédé de détection de la présence d'obstacle dans l'environnement du véhicule 10 selon certains modes de réalisation de l'invention.

Le procédé de détection selon l'invention est implémenté dans un véhicule 10 pour détecter la présence d'un obstacle dans un environnement du véhicule 10 à partir de données issues d'un système de perception 20 embarqué dans le véhicule 10. Comme décrit précédemment, le système de perception 20 comprend :
- un LIDAR 21 positionné sur une face supérieure du véhicule 10 et configuré pour scanner à 360° l'environnement du véhicule 10 ;
- cinq caméras 22, 23, 24, 25, 26 positionnées autour du véhicule 10, chacune des caméras étant configurée pour capturer au moins une image I₂, I₃, I₄, I₅, I₆ dans une portion angulaire 32, 33, 34, 35, 36 de l'environnement du véhicule. Les cinq caméras 22, 23, 24, 25, 26 peuvent être positionnées autour du véhicule 10 pour capturer des portions de l'environnement du véhicule 10. Avantageusement, les cinq caméras 22, 23, 24, 25, 26 sont positionnées autour du véhicule 10 de sorte que les cinq caméras capturent des images dans l'environnement du véhicule à 360°.

Le procédé comprend une étape 100 de scan de l'environnement du véhicule par le LIDAR 21 pour obtenir un nuage de points 31 de l'obstacle.

Le LIDAR (abréviation de Light Imaging Detection and Ranging pour détection et télémétrie par imagerie lumineuse) est une technologie permettant la mesure de distance entre le LIDAR et un objet. Le LIDAR mesure la distance à un objet en l'illuminant avec une lumière laser pulsée et en mesurant les impulsions réfléchies avec un capteur. Dans le cadre de l'invention, le LIDAR 21 envoie de l'énergie lumineuse dans son environnement, c'est-à-dire à 360°, tout autour du véhicule 10. Cette lumière émise peut être appelée faisceau ou impulsion. S'il y a un obstacle dans l'environnement du véhicule 10, la lumière émise vers l'obstacle est réfléchie vers le LIDAR 21 et le LIDAR 21 mesure la lumière réfléchie vers un capteur du LIDAR 21. Cette lumière réfléchie est dénommée écho ou retour. La distance spatiale entre le LIDAR 21 et le point de contact sur l'obstacle est calculée en comparant le retard entre l'impulsion et le retour. En présence d'un obstacle dans l'environnement du véhicule 10, suite à l'étape 100 du procédé selon l'invention, le LIDAR 21 permet d'avoir un nuage de points de l'obstacle. S'il y a un autre obstacle (par exemple un obstacle à gauche et un obstacle à droite du véhicule), le LIDAR 21 permet d'avoir deux nuages de points, un correspondant à l'obstacle de gauche et un autre correspondant à l'obstacle de droite.

Le LIDAR 21 présente l'avantage par rapport à d'autres systèmes basés sur la vision, de ne pas nécessiter de lumière. Il peut détecter des objets à haute sensibilité. Ainsi, le LIDAR 21 peut cartographier avec précision l'environnement tridimensionnel du véhicule 10 à une haute résolution. Les différences de temps de retour laser et de longueurs d'onde peuvent être utilisées pour réaliser des représentations numériques 3D d'objets entourant le véhicule 10. Toutefois, il faut noter que le LIDAR 21 ne peut pas distinguer les objets les uns des autres. Autrement dit, s'il y a deux objets de forme et de taille sensiblement identiques dans l'environnement du véhicule, le LIDAR 21 seul ne saura pas les discerner.

Le procédé de détection selon l'invention comprend, pour chaque caméra 22, 23, 24, 25, 26, une étape 200 de capture d'image I₂, I₃, I₄, I₅, I₆ pour obtenir une représentation 2D de l'obstacle situé dans la portion angulaire 32, 33, 34, 35, 36 associée à ladite caméra 22, 23, 24, 25, 26. Par exemple, en se référant à la figure 1, si un obstacle est présent à la droite du véhicule dans la portion angulaire 32, la caméra 22 prend une image I₂ qui correspond à une représentation bidimensionnelle de l'obstacle. Après l'étape 200, il y a donc cinq images I₂, I₃, I₄, I₅, I₆ bidimensionnelles de l'environnement du véhicule 10.

Le système de perception 20 récupère ainsi les informations des caméras 22, 23, 24, 25, 26. Les informations récupérées pour chaque caméra sont traitées séparément, puis fusionnées à un stade ultérieur, expliqué par la suite.

Le procédé de détection selon l'invention comprend ensuite, pour chaque image I₂, I₃, I₄, I₅, I₆ capturée, une étape 300 d'attribution des points du nuage de points 31 correspondant à la représentation 2D dudit obstacle pour former un objet 3D 41.

L'étape 300 peut être scindée en trois sous-étapes : une sous-étape 301 de segmentation des obstacles, une sous-étape 302 d'association des points du nuage de points 31 correspondants à l'image considérée à la segmentation de l'obstacle et une sous-étape 303 d'estimation d'un objet tridimensionnel 41.

Pendant l'étape 300, pour chaque image 22, 23, 24, 25, 26 reçue, un réseau neuronal convolutif (aussi connu sous l'abréviation CNN pour son acronyme anglo-saxon Convolutional Neural Network) fournit une détection d'obstacles avec une segmentation d'instance basée sur l'image. Cela permet d'identifier l'obstacle pertinent dans les environnements du véhicule 10, tels que par exemple des véhicules, des piétons ou tout autre obstacle pertinent. Le résultat de cette détection est l'obstacle segmenté dans l'image, c'est-à-dire la forme de l'obstacle dans l'image et sa classe. Il s'agit de la sous-étape 301 de segmentation des obstacles. En d'autres termes, à partir des images bidimensionnelles capturées, la sous-étape 301 assure le traitement des images pour récupérer le contour et les points de l'obstacle. On parle de segmentation. A ce stade, les informations sont en 2D.

Une fois les obstacles détectés et segmentés dans la zone de l'image considérée, après la sous-étape 301, les points du nuage de points 31 du LIDAR 21 qui appartiennent à chaque obstacle (c'est-à-dire les points 31 du LIDAR 21 projetés dans la zone de l'image I₂ qui appartient à chaque obstacle) sont identifiés. Il s'agit de la sous-étape 302 d'association des points du nuage de points 31 à la segmentation de l'obstacle. Cette sous-étape 302 peut être vue comme la projection des points LIDAR à l'image segmentée correspondante. En d'autres termes, à partir de l'image segmentée (en deux dimensions), la projection des points LIDAR permet d'obtenir un objet en trois dimensions.

Ici, la qualité de cette segmentation dépend beaucoup de la précision du processus d'étalonnage. À ce moment, ces points peuvent inclure des valeurs aberrantes en raison de la superposition d'obstacles ou d'erreurs dans la détection et/ou l'étalonnage. Afin d'éliminer ces erreurs, le procédé peut comprendre une étape d'estimation visant à supprimer les valeurs aberrantes, fournir la taille estimée, le centre du cadre de délimitation et la rotation estimée du cadre de délimitation.

Plus précisément, la sous-étape 302 d'association des points du nuage de points 31 à la segmentation de l'obstacle est constituée d'une pluralité d'étapes. Tout d'abord, la structure géométrique derrière les données brutes LIDAR (nuage de points 31) est récupérée. Cette approche est capable d'estimer avec précision l'emplacement, la taille et l'orientation des obstacles dans la scène en utilisant uniquement des informations LIDAR. À cette fin, il est nécessaire que le nuage de points 31 soit segmenté à l'aide de régions d'image d'intérêt. C'est ainsi que les images 22, 23, 24, 25, 25 bidimensionnelles (2D) sont utilisées pour extraire des régions 3D (appelées frustums) du nuage de points 31 qui sont ensuite alimentées au modèle pour estimer les boîtes de délimitation 3D orientées des obstacles. En effectuant ces étapes, le procédé de détection 3D de l'invention reçoit en entrée une segmentation précise des objets dans le nuage de points 31, tirant ainsi parti des capacités du cadre de détection 2D sélectionné. Cela fournit non seulement des régions d'intérêt dans l'espace image, mais aussi une segmentation précise. Ce traitement se différencie des pratiques de l'art antérieur et conduit à la suppression de la plupart des points du nuage de points 31 qui n'appartiennent pas à l'objet réel dans l'environnement. Il en résulte une segmentation d'obstacles plus fine dans le nuage LIDAR avant d'effectuer la sous-étape 303 d'estimation d'un objet tridimensionnel 41, obtenant ainsi un meilleur résultat de détection 3D.

L'obtention de l'estimation de taille, d'emplacement et d'orientation d'un obstacle est effectuée comme suit.

En supposant un bon étalonnage du LIDAR 21, les informations provenant des deux capteurs sont associées en projetant les points laser sur le plan de l'image (par exemple I₂). Une fois les données RVB-D (Rouge-Vert-Bleu-Distance) disponibles, les informations RVB sont utilisées pour extraire la segmentation d'instance des obstacles dans la scène. Ensuite, les masques des obstacles sont utilisés pour extruder les informations 3D, obtenant le nuage de points des obstacles à partir des données de profondeur, qui sont utilisées comme entrée pour le réseau de détection orienté 3D.

Tout d'abord, les coordonnées 3D et les informations d'intensité des points masqués par la phase de segmentation d'instance sont utilisées comme entrée dans un réseau de segmentation d'instance 3D. Le but de ce module est d'affiner la représentation des obstacles en nuage de points, en filtrant toutes les valeurs aberrantes qui pourraient avoir été classées comme points d'obstacles par le détecteur 2D. Ainsi, pour chaque point unique des obstacles masqués, un niveau de confiance est estimé indiquant si le point appartient à l'obstacle correspondant ou, au contraire, doit être supprimé. Par conséquent, ce réseau effectue une classification binaire pour différencier les points d'obstacle et de fond.

Après l'étape de segmentation 3D, le cadre de délimitation 3D de l'obstacle est calculé. Cette phase est divisée en deux étapes différentes. Tout d'abord, une estimation grossière du centre de l'obstacle est réalisée via un réseau T-Net. Ce modèle, également basé sur l'architecture PointNet, vise à calculer une estimation du résidu entre le centre de gravité des points masqués et le centre réel de l'obstacle. Une fois le résidu obtenu, les points masqués sont traduits dans ce nouveau référentiel puis introduits dans le module final. Le but de ce dernier réseau est le calcul de la boîte 3D orientée finale des obstacles (que l'on appelle aussi objet 3D 41 dans cette description) de la sous-étape 303. Comme ses prédécesseurs, ce modèle suit une architecture de type PointNet. La sortie des couches entièrement convolutives situées après le bloc d'encodeur de caractéristiques représente les paramètres de la boîte d'obstacles, y compris les dimensions, un résidu central plus fin et l'orientation de l'obstacle.

Après la sous-étape 303 d'estimation d'un objet tridimensionnel 41, le procédé de détection selon l'invention comprend une étape 400 de fusion des objets 3D 41 permettant de générer une carte 3D 42 des obstacles tout autour du véhicule 10. Avantageusement, mais pas obligatoirement, la carte 3D 42 des obstacles autour du véhicule est une carte 3D à 360°.

L'étape 400 de fusion des objets 3D comprend, une fois les informations traitées par caméra, l'identification de la caméra qui contient le plus d'informations par obstacle. De cette façon, les obstacles qui tombent dans le champ de vision de plusieurs caméras ne sont pas dupliqués (sous-étape 401). Par la suite, après cette suppression, il y a une seule détection par obstacle, et grâce aux informations LIDAR, toutes sont référées au même point, c'est-à-dire l'origine des coordonnées LIDAR. Grâce à cette étape, une carte 42 de détection environnante 3D complète est créée (sous-étape 402), fournissant une détection, avantageusement à 360 degrés, basée sur une caméra LIDAR.

Ensuite, le procédé de détection selon l'invention comprend une étape 500 d'estimation du mouvement de l'obstacle à partir de la carte 3D 42 générée et de données GPS 43 du véhicule 10 pour obtenir des informations 44 sur la position, dimension, orientation et vitesse de l'obstacle et/ou de véhicules détectés dans l'environnement du véhicule 10.

L'étape 500 d'estimation du mouvement de l'obstacle peut être scindée en deux sous-étapes : la sous-étape 501 d'association de données, et la sous-étape 502 d'association de l'obstacle précédemment détecté avec ledit obstacle en cours de détection.

La sous-étape 502 d'association de l'obstacle précédemment détecté avec ledit obstacle permet de maintenir la cohérence temporelle dans les détections. En d'autres termes, les détections précédentes sont associées aux nouvelles détections, et ainsi le mouvement d'un obstacle spécifique peut être estimé sur la base d'un historique des détections. En outre, en cas de détection erronée, il est possible de maintenir la cohérence du suivi, c'est-à-dire de fournir une sortie pour un obstacle, même dans les cas où il a été détecté de manière erronée.

L'étape 500 d'estimation est basée sur l'utilisation d'un filtre de Kalman et sur une technique d'association de données qui utilise la distance de Mahalanobis pour faire correspondre l'ancienne détection (c'est-à-dire la détection précédente) avec la détection actuelle (c'est-à-dire la détection courante).

La sous-étape 501 d'association de données vise à identifier dans le délai actuel les obstacles précédemment détectés. Cela se fait en utilisant l'algorithme hongrois et la distance de Mahalanobis. L'algorithme hongrois s'exécute juste après chaque étape de prédiction du filtre de Kalman, générant une matrice de coûts dans laquelle chaque ligne représente une prédiction de suivi et chaque colonne représente un nouvel obstacle du système de détection. La valeur des cellules matricielles est la distance de Mahalanobis entre chaque prédiction et détection. Plus cette distance est petite, plus l'association entre une prédiction et une détection donnée est probable.

La distance de Mahalanobis représente la similitude entre deux variables aléatoires multidimensionnelles. La principale différence entre Mahalanobis et la distance euclidienne est que la première utilise la valeur de la variance dans chaque dimension. De cette façon, les dimensions souffrant d'un écart-type plus important (calculé directement par filtre de Kalman) auront un poids inférieur dans le calcul de la distance.

La racine carrée de la distance de Mahalanobis calculée à partir de la sortie du filtre de Kalman donne une distribution chi-carré. Ce n'est que si cette valeur est inférieure ou égale à une certaine valeur seuil que la prédiction et la détection correspondantes peuvent être associées. Cette valeur seuil est différente pour chaque type d'obstacle d'un certain niveau de confiance, différent pour chaque type d'obstacle.

Comme déjà mentionné, la sous-étape d'estimation du mouvement de l'obstacle est basée sur l'utilisation d'un filtre de Kalman. L'implémentation originale du filtre de Kalman est un algorithme conçu pour estimer l'état d'un système dynamique linéaire perturbé par un bruit blanc additif. Dans le procédé selon l'invention, il est utilisé pour estimer le mouvement (position, vitesse et accélération) des obstacles détectés. Cependant, le filtre de Kalman exige un système dynamique linéaire, ainsi, dans ce type d'applications, des alternatives telles que le filtre de Kalman étendu (aussi connu sous le terme anglo-saxon Extended Kalman Filter) ou le filtre de Kalman « unscented » (aussi connu sous le terme anglo-saxon Unscented Kalman Filter) sont courantes. L'algorithme de suivi mis en œuvre utilise la version « racine carrée » du filtre de Kalman « unscented ». La version « unscented » du filtre de Kalman nous permet d'utiliser des équations de mouvement non linéaires pour décrire le mouvement et la trajectoire des obstacles suivis. De plus, la version « racine carrée » apporte une stabilité supplémentaire au filtre de Kalman, car elle garantit toujours une matrice de covariance définie positive, évitant les erreurs numériques.

L'algorithme de suivi UKF (pour l'abréviation du terme anglo-saxon « Unscented Kalman Filter ») présenté fonctionne en deux étapes. La première étape, appelée étape de prédiction, utilise l'estimation d'état du pas de temps précédent pour produire une estimation de l'état au pas de temps actuel. Plus tard, au stade de la mise à jour, la prédiction actuelle est combinée avec les informations d'observation actuelles pour affiner l'estimation précédente. En règle générale, ces deux étapes alternent, mais si une observation n'est pas disponible pour une raison quelconque, la mise à jour peut être ignorée et plusieurs étapes de prédiction peuvent être effectuées. De plus, si plusieurs observations indépendantes sont disponibles en même temps, plusieurs étapes de mise à jour peuvent être effectuées. Pour cette approche, chaque type d'obstacle est associé à un modèle de système. Ce modèle est composé d'une série d'équations cinématiques décrivant son mouvement. Dans l'étape de prédiction, ces équations de mouvement sont utilisées pour estimer la position des obstacles à chaque pas de temps. Ensuite, dans l'étape de mise à jour, une mesure bruitée de la position de l'obstacle provient de l'étape de détection et l'estimation de l'état du système est améliorée. Les cyclistes et les voitures ont un modèle de système plus complexe associé car ils peuvent aller plus vite et leur trajectoire comprend des accélérations plus élevées et des virages plus complexes.

Lorsqu'un obstacle suivi ne peut pas être associé à une nouvelle détection à un moment donné, cet obstacle reste dans un état d'invisibilité et continue d'être suivi en arrière-plan. Cela fournit une cohérence temporaire aux détections en cas de défaillance du système de perception. On attribue à chaque obstacle un score associé. La valeur de ce score augmente chaque fois que l'algorithme de suivi associe une nouvelle détection à un obstacle suivi et diminue chaque fois que l'obstacle est dans un état d'invisibilité. En dessous d'un certain seuil prédéfini, l'obstacle est éliminé.

L'utilisation d'un algorithme de suivi permet de réaliser les prédictions à une fréquence plus élevée que le système de perception. Il en résulte une augmentation de la fréquence de sortie jusqu'à 20 Hz.

L'étape 500 d'estimation peut comprendre avantageusement une sous-étape de prise en compte du mouvement propre du véhicule 10. En effet, le mouvement du véhicule peut introduire des erreurs dans le mouvement des obstacles suivis. C'est pourquoi ce mouvement doit être compensé. Pour atteindre cet objectif, on utilise le récepteur GPS.

Au début de chaque itération de l'algorithme, l'orientation du véhicule est obtenue grâce au capteur inertiel. Les nouvelles détections sont ensuite orientées en utilisant la valeur d'orientation du véhicule avant d'être introduites dans le filtre de Kalman, compensant ainsi l'orientation du véhicule. En sortie de l'algorithme, la transformation inverse est appliquée aux obstacles. En procédant ainsi, il en résulte l'obtention des détections de sortie exprimées dans le système de coordonnées locales du véhicule.

Ainsi, l'invention permet de créer un modèle comportemental du véhicule, en obtenant les informations sur les véhicules/obstacles dans l'environnement du véhicule. Cette sortie est la classe de l'obstacle fournie par la détection initiale, la taille fournie dans l'algorithme d'estimation de la boîte englobante et l'emplacement, la vitesse et l'orientation fournis par l'algorithme de suivi.

Avantageusement, le procédé de détection selon l'invention peut en outre comprendre une étape 600 de contrôle implémentant une boucle de contrôle pour générer au moins un signal de commande à un ou plusieurs actionneurs du véhicule 10 en fonction des informations de l'obstacle détecté. Un actionneur du véhicule 10 peut être la pédale de frein et/ou le frein à main qui est/sont actionné(s) pour réaliser un freinage d'urgence et immobiliser le véhicule avant d'éviter une collision avec l'obstacle. Un autre actionneur du véhicule 10 peut être le volant qui est orienté pour modifier la trajectoire du véhicule 10 pour éviter un obstacle détecté.

Avantageusement, le procédé de détection selon l'invention peut comprendre une étape 700 de synchronisation temporelle du LIDAR et des caméras préalablement aux étapes 100, 200 de scan et de capture d'image. L'étape 700 permet de synchroniser le LIDAR 21 et les caméras 22, 23, 24, 25, 26 à un instant précis. L'étape 700 de synchronisation temporelle peut avoir lieu à intervalles réguliers ou irréguliers de manière préalablement prédéfinie. Ou bien l'étape 700 de synchronisation temporelle peut avoir lieu une seule fois par trajet, par exemple après le démarrage du véhicule 10.

Les modes de réalisation de l'invention permettent ainsi de détecter la présence d'un obstacle dans un environnement du véhicule, et si besoin de générer au moins un signal de commande à un ou plusieurs actionneurs du véhicule en fonction des informations de l'obstacle détecté. Ils permettent ainsi au véhicule d'éviter toute collision avec un obstacle.

Bien que non limités à de telles applications, les modes de réalisation de l'invention ont un avantage particulier pour une mise en œuvre dans des véhicules autonomes.

L'homme du métier comprendra que le système ou des sous-systèmes selon les modes de réalisation de l'invention peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée à des types de capteurs particuliers du système de perception, ni à un type de véhicule particulier (des exemples de véhicule incluent sans limitation des voitures, des camions, des bus, etc.).

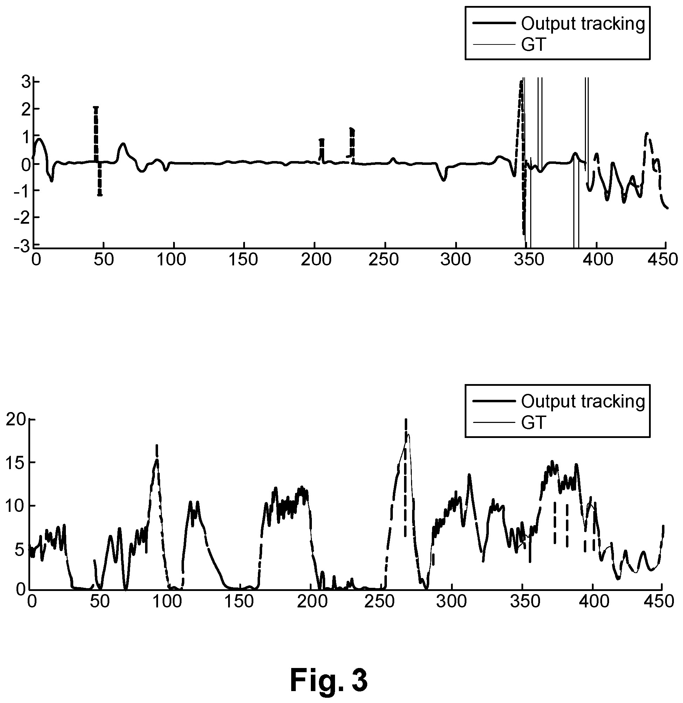

La figure 3 illustre les performances du système de perception selon des modes de réalisation de l'invention.

Pour valider le système de perception selon l'invention, deux véhicules équipés de systèmes de positionnement de haute précision ont été utilisés. Leurs positions, vitesses et orientations ont été enregistrées. La figure 3 représente l'orientation (graphique du haut) et la vitesse (graphique du bas) en fonction du temps (en secondes) d'un véhicule de référence (réalité terrain, noté GT pour « Ground Truth ») et d'un véhicule équipé du système de perception selon l'invention (noté « Output tracking »). On peut constater que les courbes se superposent et montrent ainsi les performances du système de perception selon l'invention par rapport à la réalité terrain.

Comme on peut le voir, le système de l'invention prouve ses performances et la fiabilité des détections. Les performances sur la réponse d'orientation sont particulièrement remarquables avec une faible erreur de suivi.

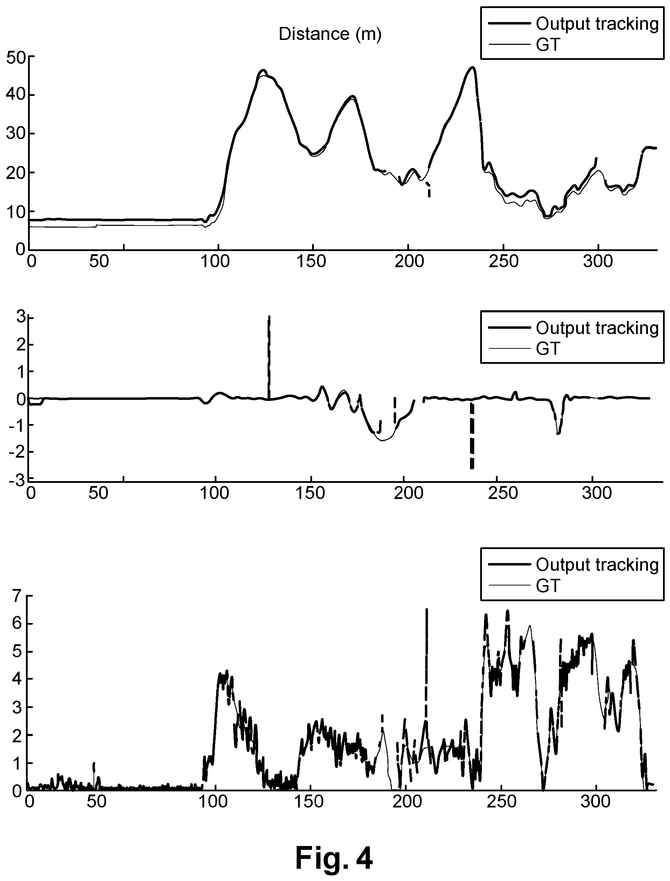

La figure 4 montre les détections de la distance à l'obstacle (graphique du haut), l'orientation (graphique du milieu) et la vitesse (graphique du bas) du véhicule détecté devant les véhicules équipés (véhicule de référence (réalité terrain, noté GT pour « Ground Truth ») et véhicule équipé du système de perception selon l'invention (noté « Output tracking »)) dans une séquence de roulage différente à celle présentée à la figure 3. Comme on peut le voir, le système de perception selon l'invention prouve ses performances et la fiabilité des détections.

Tous ces tests ont été effectués en circulation réelle, dans des conditions de conduite normale. Par souci de clarté, nous venons de montrer les performances à la suite d'un véhicule précédent le véhicule équipé, mais de bons résultats ont également été obtenus lors du suivi de plusieurs obstacles, y compris des piétons.

Le procédé de détection selon l'invention offre une solution de perception complète à 360 degrés pour véhicule autonome basée sur un LIDAR et cinq caméras. Le procédé peut avoir recours à deux autres caméras supplémentaires pour une plus grande précision. Ce procédé a recours à une nouvelle configuration de capteur, pour une fusion de bas niveau basée sur des caméras et un LIDAR. La solution proposée par l'invention fournit une détection de classe, de vitesse et de direction des obstacles sur la route.

On peut noter que le système de perception selon l'invention est complet et peut être déployé dans n'importe quel véhicule autonome. L'avantage de l'invention est d'augmenter la sécurité du véhicule en identifiant les autres véhicules/obstacles dans l'environnement du véhicule et en anticipant ses mouvements. Les véhicules actuels ont des capacités de perception limitées et cette solution fournit une solution complète à 360 degrés basée sur une détection de bas niveau.

Bien que conçue pour les véhicules autonomes, la solution peut être adaptée à tout véhicule offrant une compréhension complète de la situation des véhicules sur la route. En effet, cette solution est applicable à toute structure de véhicule. Notamment, le système de perception selon l'invention est applicable à tout type de transport, y compris les bus ou les camions.

## Revendications

1. Procédé de détection implémenté dans un véhicule (10) pour détecter la présence d'un obstacle dans un environnement du véhicule (10) à partir de données issues d'un système de perception (20) embarqué dans le véhicule (10), le système de perception (20) comprenant :
a. un LIDAR (21) positionné sur une face supérieure du véhicule (10) et configuré pour scanner à 360°l'environnement du vé hicule (10) ;
b. cinq caméras (22, 23, 24, 25, 26) positionnées autour du véhicule (10), chacune des caméras étant configurée pour capturer au moins une image (I₂, I₃, I₄, I₅, I₆) dans une portion angulaire (32, 33, 34, 35, 36) de l'environnement du véhicule;
ledit procédé étant **caractérisé en ce qu'**il comprend :
- une étape (100) de scan de l'environnement du véhicule par le LIDAR (21) pour obtenir un nuage de points (31) de l'obstacle ;
- pour chaque caméra (22, 23, 24, 25, 26), une étape (200) de capture d'image (I₂, I₃, I₄, I₅, I₆) pour obtenir une représentation 2D de l'obstacle situé dans la portion angulaire (32, 33, 34, 35, 36) associée à ladite caméra (22, 23, 24, 25, 26) ;
- pour chaque image (I₂, I₃, I₄, I₅, I₆) capturée, une étape (300) d'attribution des points du nuage de points (31) correspondant à la représentation 2D dudit obstacle pour former un objet 3D (41), l'étape (300) d'attribution des points du nuage de points (31) comprenant une étape (301) de segmentation dudit obstacle dans ladite image et une étape (302) d'association des points du nuage de points (31), obtenu à l'étape (100) de scan, à l'obstacle segmenté dans ladite image ;
- une étape (400) de fusion des objets 3D (41) comprenant une étape (401) de non-duplication dudit obstacle s'il est présent sur une pluralité d'images et une étape (402) de génération d'une carte 3D (42) des obstacles tout autour du véhicule (10) ;
- une étape (500) d'estimation du mouvement de l'obstacle à partir de la carte 3D (42) générée et de données GPS (43) du véhicule (10) pour obtenir des informations (44) sur la position, dimension, orientation et vitesse de véhicules détectés dans l'environnement du véhicule (10).

2. Procédé de détection selon la revendication 1, **caractérisé en ce qu'**il comprend en outre une étape (600) de contrôle implémentant une boucle de contrôle pour générer au moins un signal de commande à un ou plusieurs actionneurs du véhicule en fonction des informations de l'obstacle détecté.

3. Procédé de détection selon l'une quelconque des revendications 1 ou 2, **caractérisé en ce qu'**il comprend une étape (700) de synchronisation temporelle du LIDAR et des caméras préalablement aux étapes (100, 200) de scan et de capture d'image.

4. Procédé de détection selon l'une quelconque des revendications 1 à 3, **caractérisé en ce que** l'étape (500) d'estimation du mouvement de l'obstacle comprend une étape (501) d'association des données GPS (43) du véhicule (10) avec la carte 3D (42) générée, de sorte à identifier un obstacle précédemment détecté et une étape (502) d'association de l'obstacle précédemment détecté avec ledit obstacle.

5. Produit programme d'ordinateur, ledit programme d'ordinateur comprenant des instructions de code permettant d'effectuer les étapes du procédé selon l'une quelconque des revendications 1 à 4, lorsque ledit programme est exécuté sur un ordinateur.

6. Système de perception (20) embarqué dans un véhicule (10) pour détecter la présence d'un obstacle dans un environnement du véhicule (10), le système de perception étant **caractérisé en ce qu'**il comprend :
a. un LIDAR (21) positionné sur une face supérieure du véhicule (10) et configuré pour scanner à 360° l'environnement du vé hicule de sorte à générer un nuage de points (31) de l'obstacle ;
b. cinq caméras (22, 23, 24, 25, 26) positionnées autour du véhicule (10), chacune des caméras (22, 23, 24, 25, 26) étant configurée pour capturer au moins une image (I₂, I₃, I₄, I₅, I₆) dans une portion angulaire (32, 33, 34, 35, 36) de l'environnement du véhicule (10), de sorte à générer, pour chaque caméra (22, 23, 24, 25, 26), une représentation 2D de l'obstacle situé dans la portion angulaire (32, 33, 34, 35, 36) associée à ladite caméra (22, 23, 24, 25, 26) ;
c. un calculateur apte à :
i. pour chaque image (I₂, I₃, I₄, I₅, I₆) capturée, segmenter ledit obstacle dans ladite image et associer des points du nuage de points (31) à l'obstacle segmenté dans ladite image, et attribuer les points du nuage de points (31) correspondant à la représentation 2D dudit obstacle pour former un objet 3D (41) ;
ii. fusionner des objets 3D (41) pour assurer la non-duplication dudit obstacle s'il est présent sur une pluralité d'images et pour générer une carte 3D (42) des obstacles tout autour du véhicule (10) ;
iii. estimer le mouvement de l'obstacle à partir de la carte 3D (42) générée et de données GPS du véhicule (10) pour obtenir des informations sur la position, dimension, orientation et vitesse de véhicules détectés dans l'environnement du véhicule (10).

7. Système de perception (20) selon la revendication 6, **caractérisé en ce qu'**il comprend en outre :
a. une sixième caméra (27), préférentiellement positionnée à l'avant du véhicule (10), la sixième caméra étant de faible champ de vision pour une détection de loin ;
b. une septième caméra (28), préférentiellement positionnée à l'avant du véhicule (10), la septième caméra étant de large champ de vision pour une détection proche ;
chacune de la sixième et/ou septième caméra (27, 28) étant configurée pour capturer au moins une image (I₇, I₈) dans une portion angulaire (37, 38) de l'environnement du véhicule (10), de sorte à générer, pour chacune de la sixième et/ou septième caméra (27, 28), une représentation bidimensionnelle (2D) de l'obstacle situé dans la portion angulaire (37, 38) associée à la sixième et/ou septième caméra (27, 28).

## Patentansprüche

1. Detektionsverfahren, das in einem Fahrzeug (10) implementiert ist, um das Vorhandensein eines Hindernisses in einer Umgebung des Fahrzeugs (10) ausgehend von Daten aus einem Wahrnehmungssystem (20) an Bord des Fahrzeugs (10) zu detektieren, das Wahrnehmungssystem (20) umfassend:
a. ein LIDAR (21), das an einer Oberseite des Fahrzeugs (10) angeordnet ist und dazu ausgelegt ist, die Umgebung des Fahrzeugs (10) über 360° zu scannen;
b. fünf Kameras (22, 23, 24, 25, 26), die um das Fahrzeug (10) herum angeordnet sind, wobei jede der Kameras dazu ausgelegt ist, mindestens ein Bild (I₂, I₃, I₄, I₅, I₆) in einem Winkelbereich (32, 33, 34, 35, 36) der Umgebung des Fahrzeugs aufzunehmen;
wobei das Verfahren **dadurch gekennzeichnet ist, dass** es umfasst:
- einen Schritt (100) des Scannens der Umgebung des Fahrzeugs durch das LIDAR (21), um eine Punktwolke (31) des Hindernisses zu erhalten;
- für jede Kamera (22, 23, 24, 25, 26) einen Schritt (200) des Aufnehmens eines Bildes (I₂, I₃, I₄, I₅, I₆), um eine 2D-Darstellung des Hindernisses zu erhalten, das in dem der Kamera (22, 23, 24, 25, 26) zugeordneten Winkelbereich (32, 33, 34, 35, 36) gelegen ist;
- für jedes aufgenommene Bild (I₂, I₃, I₄, I₅, I₆) einen Schritt (300) des Zuweisens der Punkte der Punktwolke (31), die der 2D-Darstellung des Hindernisses entspricht, um ein 3D-Objekt (41) zu bilden, wobei der Schritt (300) des Zuweisens der Punkte der Punktwolke (31) einen Schritt (301) des Segmentierens des Hindernisses in dem Bild und einen Schritt (302) des Zuordnens der Punkte der Punktwolke (31), die in dem Schritt (100) des Scannens erhalten wurde, zu dem segmentierten Hindernis in dem Bild umfasst;
- einen Schritt (400) des Zusammenführens der 3D-Objekte (41), umfassend einen Schritt (401) des Nichtduplizierens des Hindernisses, wenn es auf einer Mehrzahl von Bildern vorhanden ist, und einen Schritt (402) des Erzeugens einer 3D-Karte (42) der Hindernisse um das Fahrzeug (10) herum;
- einen Schritt (500) des Schätzens der Bewegung des Hindernisses ausgehend von der erzeugten 3D-Karte (42) und von GPS-Daten (43) des Fahrzeugs (10), um Informationen (44) über die Position, Größe, Ausrichtung und Geschwindigkeit von in der Umgebung des Fahrzeugs (10) detektierten Fahrzeugen zu erhalten.

2. Detektionsverfahren nach Anspruch 1, **dadurch gekennzeichnet, dass** es ferner einen Schritt (600) des Regelns umfasst, der einen Regelkreis implementiert, um mindestens ein Steuersignal an einen oder mehrere Aktoren des Fahrzeugs in Abhängigkeit von den Informationen des detektierten Hindernisses zu erzeugen.

3. Detektionsverfahren nach einem der Ansprüche 1 oder 2, **dadurch gekennzeichnet, dass** es einen Schritt (700) des zeitlichen Synchronisierens des LIDAR und der Kameras vor den Schritten (100, 200) des Scannens und Aufnehmens eines Bildes umfasst.

4. Detektionsverfahren nach einem der Ansprüche 1 bis 3, **dadurch gekennzeichnet, dass** der Schritt (500) des Schätzens der Bewegung des Hindernisses einen Schritt (501) des Zuordnens der GPS-Daten (43) des Fahrzeugs (10) zu der erzeugten 3D-Karte (42), so dass ein zuvor detektiertes Hindernis identifiziert wird, und einen Schritt (502) des Zuordnens des zuvor detektierten Hindernisses zu dem Hindernis umfasst.

5. Computerprogrammprodukt, wobei das Computerprogramm Codeanweisungen umfasst, die es ermöglichen, bei der Ausführung des Programms auf einem Computer die Schritte des Verfahrens nach einem der Ansprüche 1 bis 4 auszuführen.

6. Wahrnehmungssystem (20) an Bord eines Fahrzeugs (10), um das Vorhandensein eines Hindernisses in einer Umgebung des Fahrzeugs (10) zu detektieren, wobei das Wahrnehmungssystem **dadurch gekennzeichnet ist, dass** es umfasst:
a. ein LIDAR (21), das an einer Oberseite des Fahrzeugs (10) angeordnet ist und dazu ausgelegt ist, die Umgebung des Fahrzeugs über 360° zu scannen, so dass eine Punktwolke (31) des Hindernisses erzeugt wird;
b. fünf Kameras (22, 23, 24, 25, 26), die um das Fahrzeug (10) herum angeordnet sind, wobei jede der Kameras (22, 23, 24, 25, 26) dazu ausgelegt ist, mindestens ein Bild (I₂, I₃, I₄, I₅, I₆) in einem Winkelbereich (32, 33, 34, 35, 36) der Umgebung des Fahrzeugs (10) aufzunehmen, so dass für jede Kamera (22, 23, 24, 25, 26) eine 2D-Darstellung des Hindernisses erzeugt wird, das in dem der Kamera (22, 23, 24, 25, 26) zugeordneten Winkelbereich (32, 33, 34, 35, 36) gelegen ist;
c. einen Rechner, der in der Lage ist:
i . für jedes aufgenommene Bild (I₂, I₃, I₄, I₅, I₆) das Hindernis in dem Bild zu segmentieren und Punkte der Punktwolke (31) dem segmentierten Hindernis in dem Bild zuzuordnen und die Punkte der Punktwolke (31), die der 2D-Darstellung des Hindernisses entspricht, zuzuweisen, um ein 3D-Objekt (41) zu bilden;
ii. 3D-Objekte (41) zusammenzuführen, um das Nichtduplizieren des Hindernisses sicherzustellen, wenn es auf einer Mehrzahl von Bildern vorhanden ist, und um eine 3D-Karte (42) der Hindernisse um das Fahrzeug (10) herum zu erzeugen;
iii. die Bewegung des Hindernisses ausgehend von der erzeugten 3D-Karte (42) und von GPS-Daten des Fahrzeugs (10) zu schätzen, um Informationen über die Position, Größe, Ausrichtung und Geschwindigkeit von in der Umgebung des Fahrzeugs (10) detektierten Fahrzeugen zu erhalten.

7. Wahrnehmungssystem (20) nach Anspruch 6, **dadurch gekennzeichnet, dass** es ferner umfasst:
a. eine sechste Kamera (27), die vorzugsweise an der Vorderseite des Fahrzeugs (10) angeordnet ist, wobei die sechste Kamera ein kleines Sichtfeld für eine Ferndetektion aufweist;
b. eine siebte Kamera (28), die vorzugsweise an der Vorderseite des Fahrzeugs (10) angeordnet ist, wobei die siebte Kamera ein weites Sichtfeld für eine Nahdetektion aufweist;
wobei jede der sechsten und/oder siebten Kameras (27, 28) dazu ausgelegt ist, mindestens ein Bild (I₇, I₈) in einem Winkelbereich (37, 38) der Umgebung des Fahrzeugs (10) aufzunehmen, so dass für jede der sechsten und/oder siebten Kameras (27, 28) eine zweidimensionale (2D) Darstellung des Hindernisses erzeugt wird, das in dem der sechsten und/oder siebten Kamera (27, 28) zugeordneten Winkelbereich (37, 38) gelegen ist.

## Claims

1. Detection method implemented in a vehicle (10) for detecting the presence of an obstacle in an environment of the vehicle (10) based on data originating from a perception system (20) on board the vehicle (10), the perception system (20) comprising:
a. a lidar (21) positioned on an upper face of the vehicle (10) and configured to perform 360° scanning of the environment of the vehicle (10);
b. five cameras (22, 23, 24, 25, 26) positioned around the vehicle (10), each of the cameras being configured to capture at least one image (I₂, I₃, I₄, I₅, I₆) in an angular portion (32, 33, 34, 35, 36) of the environment of the vehicle;
said method being **characterized in that** it comprises:
- a step (100) of scanning the environment of the vehicle by way of the lidar (21) in order to obtain a point cloud (31) of the obstacle;
- for each camera (22, 23, 24, 25, 26), a step (200) of capturing images (I₂, I₃, I₄, I₅, I₆) in order to obtain a 2D representation of the obstacle located in the angular portion (32, 33, 34, 35, 36) associated with said camera (22, 23, 24, 25, 26);
- for each captured image (I₂, I₃, I₄, I₅, I₆), a step (300) of assigning the points of the point cloud (31) corresponding to the 2D representation of said obstacle in order to form a 3D object (41), the step (300) of assigning the points of the point cloud (31) comprising a step (301) of segmenting said obstacle in said image and a step (302) of associating the points of the point cloud (31), which is obtained in the scanning step (100), with the segmented obstacle in said image;
- a step (400) of fusing the 3D objects (41) comprising a step (401) of not duplicating said obstacle if it is present over a plurality of images and a step (402) of generating a 3D map (42) of the obstacles all around the vehicle (10);
- a step (500) of estimating the movement of the obstacle based on the generated 3D map (42) and on GPS data (43) of the vehicle (10) in order to obtain information (44) regarding the position, dimension, orientation and speed of vehicles detected in the environment of the vehicle (10).

2. Detection method according to Claim 1, **characterized in that** it furthermore comprises a control step (600) implementing a control loop in order to generate at least one control signal for one or more actuators of the vehicle on the basis of the information regarding the detected obstacle.

3. Detection method according to either one of Claims 1 and 2, **characterized in that** it comprises a step (700) of temporally synchronizing the lidar and the cameras prior to the scanning and image-capturing steps (100, 200) .

4. Detection method according to any one of Claims 1 to 3, **characterized in that** the step (500) of estimating the movement of the obstacle comprises a step (501) of associating the GPS data (43) of the vehicle (10) with the generated 3D map (42), so as to identify a previously detected obstacle, and a step (502) of associating the previously detected obstacle with said obstacle.

5. Computer program product, said computer program comprising code instructions for performing the steps of the method according to any one of Claims 1 to 4 when said program is executed on a computer.

6. Perception system (20) on board a vehicle (10) for detecting the presence of an obstacle in an environment of the vehicle (10), the perception system being **characterized in that** it comprises:
a. a lidar (21) positioned on an upper face of the vehicle (10) and configured to perform 360° scanning of the environment of the vehicle so as to generate a point cloud (31) of the obstacle;
b. five cameras (22, 23, 24, 25, 26) positioned around the vehicle (10), each of the cameras (22, 23, 24, 25, 26) being configured to capture at least one image (I₂, I₃, I₄, I₅, I₆) in an angular portion (32, 33, 34, 35, 36) of the environment of the vehicle (10), so as to generate, for each camera (22, 23, 24, 25, 26), a 2D representation of the obstacle located in the angular portion (32, 33, 34, 35, 36) associated with said camera (22, 23, 24, 25, 26);
c. a computer able to:
i. for each captured image (I₂, I₃, I₄, I₅, I₆), segment said obstacle in said image and associate points of the point cloud (31) with the segmented obstacle in said image, and assign the points of the point cloud (31) corresponding to the 2D representation of said obstacle in order to form a 3D object (41);
ii. fuse 3D objects (41) in order to ensure that said obstacle is not duplicated if it is present over a plurality of images and in order to generate a 3D map (42) of the obstacles all around the vehicle (10);
iii. estimate the movement of the obstacle based on the generated 3D map (42) and on GPS data of the vehicle (10) in order to obtain information regarding the position, dimension, orientation and speed of vehicles detected in the environment of the vehicle (10).

7. Perception system (20) according to Claim 6, **characterized in that** it furthermore comprises:
a. a sixth camera (27), preferably positioned at the front of the vehicle (10), the sixth camera having a small field of view for long-distance detection;
b. a seventh camera (28), preferably positioned at the front of the vehicle (10), the seventh camera having a wide field of view for short-distance detection;
each of the sixth and/or seventh camera (27, 28) being configured to capture at least one image (I₇, I₈) in an angular portion (37, 38) of the environment of the vehicle (10), so as to generate, for each of the sixth and/or seventh camera (27, 28), a two-dimensional (2D) representation of the obstacle located in the angular portion (37, 38) associated with the sixth and/or seventh camera (27, 28).
